# EUROPÄISCHE PATENTANMELDUNG

(11) **EP 0 884 125 A2**
(43) Veröffentlichungstag der Anmeldung: **16.12.1998**
(21) Anmeldenummer: 98109707.4
(22) Anmeldetag: 28.05.1998
(51) Int. Cl.: B23D 77/00

(54) **Reibahle**

(30) Priorität: 12.06.1997 DE 19724855
(71) Anmelder: August Beck GmbH & Co., D-72474 Winterlingen (DE)
(72) Erfinder: Schanz, Gerhard, 72393 Burladingen-Melchingen (DE)
(74) Vertreter: Maser, Jochen, Dipl.-Ing.

(57) **Zusammenfassung**

Die Erfindung betrifft ein Verfahren zur Hochleistungs-Feinbearbeitung von Bohrungen (31) mit einem rotierenden Schaftwerkzeug (11), welches einen Schaft (12) aufweist, in dem zumindest ein Längskanal (17) für Kühl-/Schmiermittel vorgesehen ist und einem Schneidkopf, (13), der zumindest eine Schneide (19) und eine Spannut (15) aufweist, wobei ein Rückspanwinkel (γ) einer Nebenschneide (24) von kleiner als 0° verwendet wird und die Bohrung (31) mit einem Vorschub pro Umdrehung und Schneide (19) des Schaftwerkzeuges (11) bearbeitet wird, der einem Aufmaß (32) der zu bearbeitenden Bohrung entspricht.

## Beschreibung

Die Erfindung betrifft ein Verfahren zur Bearbeitung von Bohrungen mit einem rotierenden Schaftwerkzeug gemäß dem Oberbegriff des Anspruchs 1 und ein rotierendes Schaftwerkzeug gemäß dem Anspruch 8.

Zur Bearbeitung von Bohrungen, insbesondere zur Feinbearbeitung oder Hochleistungsfeinbearbeitung, sind bereits rotierende Schaftwerkzeuge bekannt geworden, die als Reibahle ausgebildet sind. Die Reibahlen weisen einen Schaft auf, in dem sich zumindest ein Längskanal für Kühl-/Schmiermittel erstreckt. Der Schaft ist mit einem Schneidkopf verbunden, der zumindest eine Spannut und einen Nutenauslaufbereich aufweist. Derartige Reibahle zur Feinbearbeitung sind beispielsweise aus der DIN 2172, Teil 1 bekannt. In dieser DIN-Norm sind unterschiedliche Parameter zur Schneidengeometrie, wie beispielsweise die Anschnittlänge, der Orthogonalspanwinkel, der Einstellwinkel, der Rückspanwinkel, der Nebenschneidewinkel, der Seitenspanwinkel oder dergleichen festgelegt. Beispielsweise ist für eine Maschinen-Reibahle ein Einstellwinkel κ gleich 45° angegeben. Für Handreibahle ist der Einstellwinkel κ gleich 20' bis 30'. Somit sind für DIN-Werkzeuge Einstellwinkel κ vorgesehen, die zwischen 0° bis 45° liegen. Der Rückspanwinkel γ liegt je nach Werkzeugtyp in einem Bereich zwischen 0° bis 15°.

Derartig rotierende Schaftwerkzeuge weisen den Nachteil auf, daß sie bei der Spanbildung sehr lange, bandförmig ablaufende Gebilde, wie beispielsweise Fließ- oder Bandspäne bzw. Wendel-, Wirr- oder Spiralspäne bilden. Diese Späne vergrößern sich noch zusätzlich bei sehr hohen Schnittgeschwindigkeiten, wie dies bei dem Einsatz derartiger Schaftwerkzeuge gegeben ist, die insbesondere in Taktstraßen, beispielsweise im Dreischicht-Betrieb bei der automatischen Fertigung, eingesetzt werden. Bei der Bearbeitung von Sacklochbohrungen werden diese langen bandförmigen Späne in Richtung auf den Schaft des Schaftwerkzeuges aus der Sacklochbohrung herausgeführt. Diese legen und wickeln sich um den Schaft des Schaftwerkzeuges. Zum einen können dadurch die Späne nicht schnell genug abgeführt werden, wodurch der Span zu lange in der Bohrung verbleibt und eine beschädigte Mantelfläche der Bohrung entstehen kann. Darüber hinaus kann ein Einführen des Schaftwerkzeuges in die nächste zu bearbeitende Bohrung erschwert werden oder ein Stillstand des Bohrwerkzeuges kann hervorgerufen werden.

Daher liegt der Erfindung die Aufgabe zugrunde, ein Verfahren zur Bearbeitung von Bohrungen mit Schaftwerkzeugen anzugeben, bei dem ein kurzbrechender Span erzeugt werden kann, der einen schnellen und sicheren Spanabtransport aus der Bohrung ermöglicht. Des weiteren liegt der Erfindung die Aufgabe zugrunde, ein rotierendes Schaftwerkzeug zu schaffen, welches aufgrund von Einstellparametern der Haupt- und/oder Nebenschneide ermöglicht, daß ein kurzbrechender Span insbesondere bei bestimmten Betriebsparametern ermöglicht ist.

Diese Aufgabe wird erfindungsgemäß durch die Merkmale gemäß dem Anspruch 1 und dem Anspruch 8 gelöst.

Das erfindungsgemäße Verfahren mit den kennzeichnenden Merkmalen weist den Vorteil auf, daß durch die Verwendung des rotierenden Schaftwerkzeuges mit einem Rückspanwinkel der Nebenschneide von kleiner als 0° und einer Vorschubgeschwindigkeit, die im wesentlichen dem Aufmaß der zu bearbeitenden Bohrung entspricht, ein kurzbrechender Span erzeugt werden kann, der insbesondere leicht und schnell aus der Sacklochbohrung herausgeführt werden kann. Dieser sehr kurzbrechende Span wird einerseits dadurch erreicht, daß eine Abstimmung des Einstellwinkels mit dem Rückspanwinkels vorgesehen ist, wobei ein negativer Rückspanwinkel bewirkt, daß ein Schleppschneiden ermöglicht ist und der Span um ein höheres Maß an der Spanfläche umgelenkt wird. Dadurch kann eine höhere Bruchumformung erzielt werden. Andererseits wird der kurzbrechende Span auch dadurch erreicht, daß die Bearbeitungsparameter, insbesondere der Vorschub, eingestellt werden, so daß ein Span ausgebildet wird, der einen rechteckförmigen bis quadratischen, vorzugsweise einen nahezu quadratischen, Querschnitt aufweist.

Das Umformverhalten für diesen sehr kurzbrechenden Span beruht auf folgender Grundlage: Bei den bekannten langen und bandförmigen Spänen weist der Querschnitt der Späne eine sehr viel größere Spanbreite als die Dicke des Spanes auf. Dies hat zur Folge, daß die beim Schneiden auftretende Wärmeenergie von dem Span voll aufgenommen werden kann. Aufgrund der sehr dünnen Ausbildung des Spanes ist ermöglicht, daß die Dehnung bzw. Dehnbarkeit des Spanes bzw. sein Umformverhalten wesentlich vergrößert werden kann, wodurch kein Bruch des Spanes erzielbar ist. Die Erfindung hingegen ermöglicht aufgrund dessen, daß die beim Schneiden auftretende Wärmeenergie nicht vollständig von dem im wesentlichen quadratischen Querschnitt des Spans aufgenommen werden kann. Des weiteren wird wegen des negativen Rückspanwinkels eine starke Bruchumformung des Spanes erzeugt, die aufgrund der geringen Aufnahme der Wärmeenergie begünstigt wird. Dadurch kann ein sehr kurzbrechender Span erzeugt werden.

In Abhängigkeit des Aufmaßes der zu bearbeitenden Bohrung wird vorteilhafterweise der Vorschub pro Schneide ausgebildet, so daß das Verhältnis zwischen dem Aufmaß und dem Vorschub im wesentlichen gleich ist, vorzugsweise eine Abweichung von +/-50 % nicht überschreitet.

Durch das erfindungsgemäße Verfahren kann eine definierte, kurzbrechende Spanbildung erreicht werden, die beim Zerspanvorgang in eine definierte Spanabfuhr übergeführt wird. Dies ist insbesondere bei sehr hohen Schnittgeschwindigkeiten von Vorteil, wodurch die Prozeß- bzw. die Betriebssicherheit erhöht wird. Das Verfahren kann bevorzugt bei der automatischen Fertigung, wie beispielsweise im Dreischicht-Betrieb oder in Taktstraßen oder dergleichen, eingesetzt werden.

In den abhängigen Ansprüchen sind vorteilhafte Weiterbildungen und Ausgestaltungen des Verfahrens angegeben.

Das Verfahren zur Erzeugung eines rechteckigen bis quadratischen Querschnitts eines Spanes ist besonders vorteilhaft bei einem Vorschub pro Schneide und Umdrehung des Schaftwerkzeuges, das einem Aufmaß der zu bearbeitenden Bohrung entspricht.

Der Einstellwinkel κ einer Hauptschneide ist vorteilhafterweise größer als 45°, vorzugsweise zwischen 45° und 90°, ausgebildet. Dadurch kann der Querschnitt des Spanes im wesentlichen bestimmt werden. Beispielsweise wird bei einem Einstellwinkel von κ gleich 90° ein nahezu quadratischer Querschnitt erzielt, wobei vorzugsweise das Aufmaß der zu bearbeitenden Bohrung dem Vorschub des Schaftwerkzeuges pro Schneide und Umdrehung entspricht.

Die erfindungsgemäße Vorrichtung gemäß den kennzeichnenden Merkmalen des Anspruchs 8 weist den Vorteil auf, daß eine Abhängigkeit zwischen der Größe des Einstellwinkels der Hauptschneide und des Rückspanwinkels der Nebenschneide gegeben ist, die einen noch kürzeren Spanbruch ermöglicht. Beispielsweise ist bei einem Einstellwinkel κ im Grenzbereich von 90° der Rückspanwinkel γ kleiner als -5° ausgebildet und kann beispielsweise in diesem Bereich bis auf 0° abnehmen. Dies beruht darauf, daß bei einem sehr großen Einstellwinkel κ ein relativ dicker Span erreicht werden kann, der nur eine geringe Umformfähigkeit besitzt, und bereits bei einem sehr kleinen negativen Rückspanwinkel bricht. Gleichzeitig kann durch diese geringe Ausbildung des Rückspanwinkels eine höhere Standzeit und höhere Bearbeitungsparameter bei gleichbleibender hoher Qualität der Bohrung ermöglicht sein.

Bei einem Einstellwinkel κ in einem Bereich zwischen 45° und 55° ist der Rückspanwinkel γ größer ausgebildet, daß heißt beispielsweise zwischen -5° und -15°. Der mit diesem Parametern erzeugte Span weist einen eher rechteckförmigen, an einen quadratischen Querschnitt angenäherten Querschnitt auf. Da das Umformverhalten dieses Querschnittes geringfügig größer ist als das eines quadratischen Querschnittes kann durch den größer ausgebildeten Rückspanwinkel γ wiederum ein sehr kurzbrechender Span ausgebildet sein.

Sofern der Einstellwinkel κ kleiner als beispielsweise 45° ausgebildet ist, kann der Rückspanwinkel γ negativer ausgebildet sein, wobei der negative Rückspanwinkel γ auch in Abhängigkeit des Vorschubes des Schaftwerkzeuges steht.

Nach einer vorteilhaften Ausgestaltung des erfindungsgemäßen Schaftwerkzeuges ist vorgesehen, daß durch die Ausgestaltung des Einstellwinkels κ von größer gleich 45° und dem Rückspanwinkel der Nebenschneide von weniger als 0° ermöglicht ist, daß ein kurzbrechender Span bei Einsatz des Schaftwerkzeuges insbesondere als Hochleistungsreibahle zur Feinbearbeitung von Sacklochbohrungen ermöglicht ist. Entgegen der durch die DIN 2172, Teil 1 festgelegten Parameter hat sich erstaunlicherweise gezeigt, daß durch die Ausbildung des Einstellwinkels gerade größer als 45° und durch die Ausbildung des negativen Rückspanwinkels ein besonders kurzbrechender Span herstellbar ist.

In den weiteren auf das Schaftwerkzeug rückbezogenen Ansprüchen sind vorteilhafte Weiterbildungen und Ausgestaltungen der Erfindung angegeben.

In der Zeichnung und der nachfolgenden Beschreibung ist ein bevorzugtes Ausführungsbeispiel der Erfindung näher dargestellt.

Es zeigen:
- Fig. 1: Eine schematische Seitenansicht eines rotierenden Schaftwerkzeuges,
- Fig. 2: einen Querschnitt des Schneidkopfes entlang der Linie II-II in Fig. 1,
- Fig. 3: eine schematisch vergrößerte Schnittdarstellung des Details X in Fig. 1,
- Fig. 4: eine vergrößerte schematische Schnittdarstellung einer Schneide entlang der Linie IV-IV in Fig. 3,
- Fig. 5a: eine schematische Querschnittsdarstellung eines erzeugten Spanes mit einem Schaftwerkzeug, welches einen Einstellwinkel von κ gleich 30° aufweist,
- Fig. 5b: eine schematische Querschnittsdarstellung eines erzeugten Spanes mit einem erfindungsgemäßen Schaftwerkzeug, welches einen Einstellwinkel von κ gleich 60° aufweist und
- Fig. 5c: eine schematische Querschnittsdarstellung eines erzeugten Spanes mit einem erfindungsgemäßen Schaftwerkzeug, welches einen Einstellwinkel von κ gleich 90° aufweist.

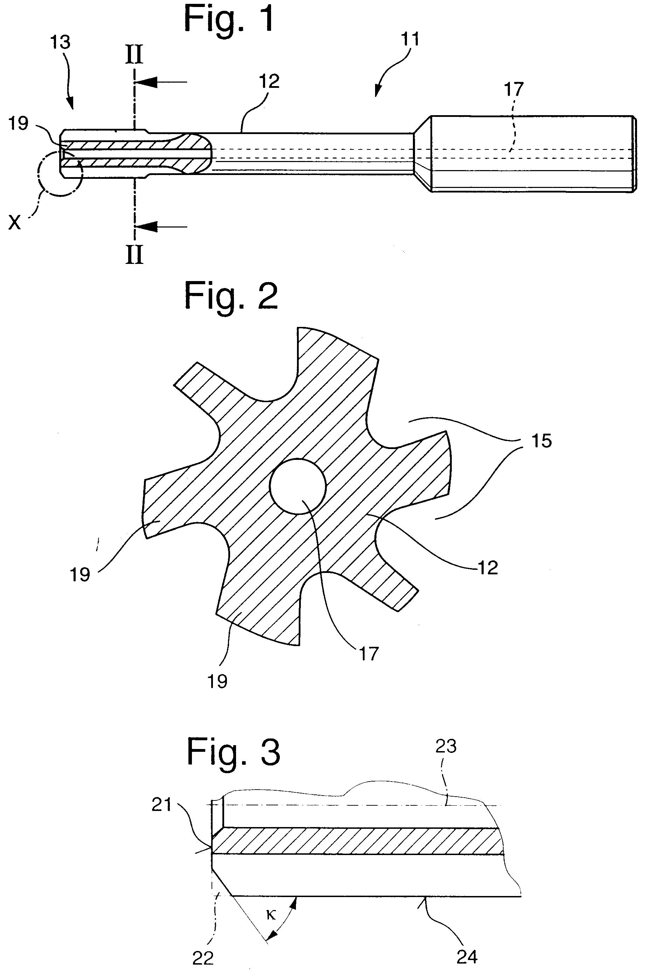

In Fig. 1 ist ein rotierendes Schaftwerkzeug 11 dargestellt, das einen zylindrischen Schaft 12 sowie einen in den zylindrischen Schaft 12 eingesetzten Schneidkopf 13 aufweist. Der im folgenden beschriebene Schneidkopf 13 ist als Formkopf aus einem Schneidmaterial hergestellt. Alternativ kann ein Schneidkopf 13 vorgesehen sein, der aus einem weniger hochwertigen Material ausgebildet ist, an dem eingesetzte Schneidplatten vorgesehen sind. Diese Ausführungsform ist besonders vorteilhaft bei Schneidköpfen 13 mit einem äußeren Durchmesser beispielsweise ab 15 bis 17 mm.

Der Schneidkopf 13 weist Spannuten 15 auf, an die sich ein Nutenauslaufbereich 16 der Spannuten 15 anschließt. In dem Schaft 12 erstreckt sich ein Kühl-/Schmiermittelkanal 17, um Kühlmittel bzw. Schmiermittel oder Kühlflüssigkeit in die Bohrung zu führen.

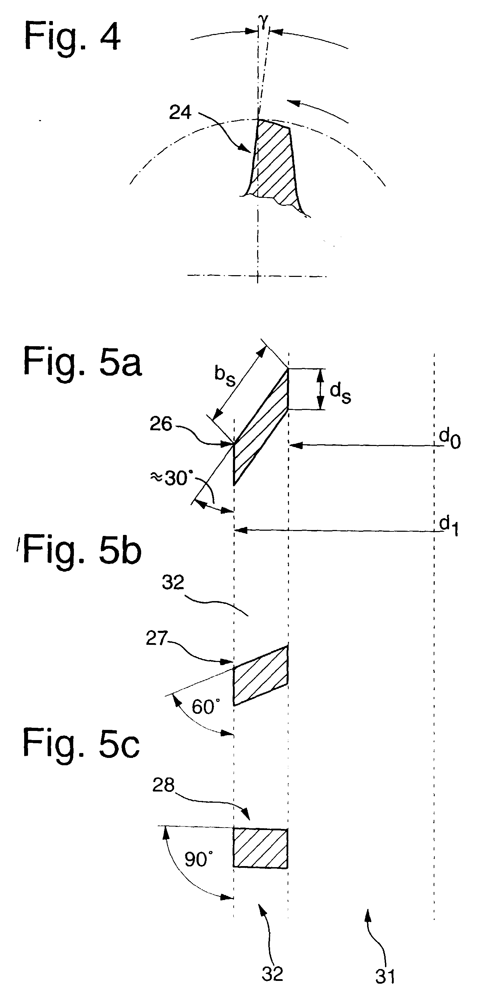

In Fig. 2 ist ein Querschnitt des Schneidkopfes 13 entlang der Linie II-II in Fig. 1 dargestellt. Dieser Schneidkopf 13 weist beispielsweise Schneiden 13 auf, die einen unterschiedlich stark ausgebildeten Schneidrücken aufweisen, um ein ruhiges Schneidverhalten zu ermöglichen. Die Ausbildung des Rückspanwinkels γ ist detailliert in Fig. 4 beschrieben und wird nachfolgend näher ausgeführt.

In Fig. 3 ist eine vergrößerte Ansicht des Details X in Fig. 1 dargestellt. Der Schneidkopf 13 weist eine in eine Bohrung, vorzugsweise in eine Sacklochbohrung, weisende Stirnseite 21 auf, an die sich radial nach außen eine Hauptschneide 22 anschließt, die beispielsweise unter einem Einstellwinkel von κ gleich 60° gegenüber einer Längsachse 23 des Schaftwerkzeuges 11 angeordnet ist. An die Hauptschneide 22 schließt sich die Nebenschneide 24 an, die im Verhältnis zur Hauptschneide 22 lang ausgebildet ist und gleichzeitig zur Führung des Schaftwerkzeuges 11 in der Bohrung dient.

Die Länge der Hauptschneide 22 ist derart vorgesehen, daß diese zumindest in der Projektion zur Bohrung gesehen größer als das Aufmaß der zu bearbeitenden Bohrung ausgestaltet ist. Der Einstellwinkel κ liegt in einem Bereich zwischen 45° und 90°, wobei ein Einstellbereich der Hauptschneide 22 von κ gleich 90° beispielhaft strichliniert dargestellt ist.

In Abhängigkeit des Einstellwinkels κ der Hauptschneide 22 wird der Rückspanwinkel γ der Nebenschneide 24 bestimmt. Alternativ kann dies auch umgekehrt der Fall sein.

Der Einstellwinkel κ und Rückspanwinkel γ werden auf die jeweiligen Einsatzfälle abgestimmt, um entsprechend optimal auf die Werkstoffbeschaffenheit, die Größe der Bohrung, der Anzahl der Schneiden bzw. Zähne als auch den Schnittparametern abgestimmt zu sein. Beispielsweise kann eine Schneide eines Schaftwerkzeuges (nicht dargestellt) einen Einstellwinkel κ in einem Bereich von 0° bis 45° aufweisen und der Rückspanwinkel negativ ausgebildet sein, wobei die Größe des negativen Rückspanwinkels an den Vorschub, die Schneidenzahl und die weiteren Betriebsparameter, wie Schneidwerkstoff, zu bearbeitendes Material und dgl. angepaßt wird.

Die Nebenschneide 24 weist gemäß Fig. 4 einen negativen Rückspanwinkel κ auf, der vorzugsweise in einem Bereich zwischen 0° bis -15° liegt. Dadurch kann ein Schleppschneiden erzielt werden, wodurch das Umformverhalten des Spanes beeinflußbar ist. Das Verhältnis von Einstellwinkel κ zu Rückspanwinkel γ bzw. deren Abhängigkeit zueinander ist derart, daß je größer der Einstellwinkel κ ausgebildet ist, desto geringer ist die Größe des Rückspanwinkels γ und umgekehrt. Selbstverständlich können auch jegliche beliebige Variationen in den bevorzugten Bereichen des Einstellwinkels κ zwischen 45° und 90° und Rückspanwinkel γ zwischen 0° bis -15° vorgesehen sein. Des weiteren kann ebenfalls vorgesehen sein, daß der Einstellwinkel κ auf eine bestimmte Größe festgelegt wird und der Rückspanwinkel γ pro Schneide unterschiedlich groß ausgebildet sein kann. Jegliche beliebige Variation zwischen dem Einstellwinkel κ, dem Rückspanwinkel γ und der Anzahl der Zähne bzw. bezüglich deren Ausgestaltung zwischen Einstellwinkel κ und dem Rückspanwinkel γ ist möglich.

In den Figuren 5a bis 5c sind Querschnitte eines erzeugten Spanes dargestellt. Der Querschnitt des Spanes 26 ist mit einem rotierenden Schaftwerkzeug hergestellt, welches beispielsweise einen Einstellwinkel von κ gleich 30° und einen Rückspanwinkel von γ gleich -15° aufweist.

Die Querschnitte 27 und 28 sind ebenfalls mit dem erfindungsgemäßen Schaftwerkzeug 11 nach dem erfindungsgemäßen Verfahren hergestellt, wobei das Schaftwerkzeug 11 zur Herstellung des Spanes gemäß Fig. 5b einen Einstellwinkel von κ gleich 60° und einen Rückspanwinkel von γ gleich -8° aufweist beispielsweise für Stahlbearbeitung. In Fig. 5c wurde der Querschnitt 28 des Spanes mit einem Schaftwerkzeug 11 nach dem erfindungsgemäßen Verfahren hergestellt, welches einen Einstellwinkel von κ gleich 90° und einen Rückspanwinkel von γ gleich -1° aufweist.

Diese beispielhaft aufgeführten Zahlenangaben sind nicht zwingend. Vielmehr kann eine individuelle Anpassung an das Material und die Arbeits- und weiteren Randbedingungen ermöglicht sein.

In den Figuren 5a bis 5c ist ein Teilausschnitt einer zu bearbeitenden Sacklochbohrung 31 dargestellt, welche vor der Feinbearbeitung einen Durchmesser d₀ aufweist und nach der Feinbearbeitung ein Endmaß gemäß dem Durchmesser d₁ aufweist. Die Differenz zwischen dem Radius R₀ des Durchmesser d₀ und des Radius R₁ des Durchmesser d₁ bildet das Aufmaß 32 der Bohrung 31, welches in Abhängigkeit des Einstellwinkels κ die Spanbreite bₛ bestimmt. Die Spandicke dₛ wird durch den Vorschub des Schaftwerkzeuges 11 für die Feinbearbeitung der Sacklochbohrung 31 bestimmt, wobei erfindungsgemäß vorgesehen ist, daß ein Vorschub im Bereich von 0,2 bis 0,3 mm/Umdrehung pro Zahn bzw. Schneide 19 vorgesehen ist. Somit entspricht die Spandicke dem Vorschub von 0,2 bis 0,3 mm. Selbstverständlich kann der Vorschub auch den Bereich von 0,1 bis 0,5 mm pro Umdrehung und pro Zahn bzw. pro Schneide umfassen. Diese Angaben stehen in Abhängigkeit des Durchmessers des Werkzeuges, also somit auch in Abhängigkeit der eingesetzten Schneiden, so daß bei kleineren Werkzeugen geringere Leistungsdaten gelten können. Dies beruht insbesondere darauf, daß bei kleinen Durchmessern ein geringerer Spanraum zur Verfügung steht, wobei jedoch gewährleistet sein muß, daß die Spanabfuhr hinreichend gesichert ist.

Vorteilhafterweise ist vorgesehen, daß das Aufmaß 32 der zu bearbeitenden Bohrung 31 im wesentlichen dem Vorschub pro Schneide in etwa entspricht, so daß ein quasi quadratischer Querschnitt des Spanes erzeugt werden kann. Es versteht sich, daß von diesem Verhältnis auch abgewichen werden kann, wobei jedoch im wesentlichen ein annähernd quadratischer oder ein rechteck-ähnlicher Querschnitt erzeugt wird.

In Fig. 5b ist ein Querschnitt 27 eines Spanes dargestellt, welcher mit einem Schaftwerkzeug 11 erzeugt ist, der als mehrschneidiges Hochleistungs-Feinbearbeitungswerkzeug eingesetzt wurde. Zur Herstellung derartiger Spanquerschnitte 27 wurden beispielsweise Schnittgeschwindigkeiten zwischen 100 m/min bis 400 m/min und ein Vorschub von 0,2 bis 0,3 mm/Umdrehung pro Schneide 19 gefahren. Der Einstellwinkel κ der Hauptschneide weist einen Winkel von 60° auf, wodurch ein quasi rechteckiger Querschnitt ausgebildet ist.

In Fig. 5c ist nach dem erfindungsgemäßen Verfahren mit dem erfindungsgemäßen Schaftwerkzeug 11 ein nahezu quadratischer Querschnitt 28 gebildet, wobei das Schaftwerkzeug 11 einen Einstellwinkel von κ gleich 90° aufweist. Die Betriebsparameter zur Feinbearbeitung der Sacklochbohrung 31 entsprechen im wesentlichen den zu 5b beschriebenen Betriebsparametern.

Die Feinbearbeitung von Sacklochbohrungen 31 können durch Kühl-/Schmiermittel unterstützt sein. Über den zentral im Schaft 12 vertaufenden Kühlmittelkanal 17 kann Kühlflüssigkeit unter Druck, vorzugsweise unter hohem Druck, zur Stirnseite 21 des Schaftwerkzeuges 11 gefördert werden, welches im Grund der Bohrung umgelenkt und über den Nutenauslaufbereich 16 aus der Bohrung 31 herausgeführt werden kann. Eine derartige Umkehrspülung fördert den Abtransport der kurzgebrochenen Späne. Alternativ, kann als Kühl-/Schmiermittel auch Luft vorgesehen sein.

Das Schaftwerkzeug 11 kann als Mehrschneiden-Reibwerkzeug oder Einschneiden-Reibwerkzeug und auch als Gewindebohrer ausgebildet sein. Weitere Anwendungen , bei denen die Parameter Einstellwinkel κ, Rückspanwinkel γ und Vorschub des Schaftwerkzeuges entsprechend aufeinander abgestimmt sind, um einen rechteckförmigen bzw. fast-quadratischen und/oder im wesentlichen quadratischen Querschnitt des Spanes zu erzeugen, der kurzbrechend ist, sind ebenfalls möglich.

## Patentansprüche

1. Verfahren zur Hochleistungs-Feinbearbeitung von Bohrungen (31) mit einem rotierenden Schaftwerkzeug (11), welches einen Schaft (12) aufweist, in dem zumindest ein Längskanal (17) für Kühl-/Schmiermittel vorgesehen ist und einem Schneidkopf (13), der zumindest eine Schneide (19) und eine Spannut (15) aufweist, dadurch gekennzeichnet, daß ein Rückspanwinkel (γ) einer Nebenschneide (24) von kleiner als 0° verwendet wird und daß die Bohrung (31) mit einem Vorschub pro Umdrehung und Schneide (19) des Schaftwerkzeuges (11) bearbeitet wird, der einem Aufmaß (32) der zu bearbeitenden Bohrung entspricht.

2. Verfahren nach Anspruch 1, dadurch gekennzeichnet, daß ein Einstellwinkel (κ) einer Hauptschneide (22) von größer als 45° verwendet wird.

3. Verfahren nach Anspruch 1 oder 2, dadurch gekennzeichnet, daß das Schaftwerkzeug (11) mit einem Vorschub von 0,1 bis 0,4 mm/Umdrehung pro Schneide (19) des Schaftwerkzeuges (11) zugestellt wird.

4. Verfahren nach einem der vorhergehenden Ansprüche, dadurch gekennzeichnet, daß das Schaftwerkzeug (11) von einer Schnittgeschwindigkeit von 100 bis 400 m/min angetrieben wird.

5. Verfahren nach einem der vorhergehenden Ansprüche, dadurch gekennzeichnet, daß eine Sacklochbohrung (31) feinbearbeitet wird.

6. Verfahren nach einem der vorhergehenden Ansprüche, dadurch gekennzeichnet, daß das Kühlmittel durch den Längskanal (17) zugeführt wird und die Späne durch eine Umkehrspülung abtransportiert werden.

7. Verfahren nach einem der vorhergehenden Ansprüche, dadurch gekennzeichnet, daß eine trockene Feinbearbeitung der Sacklochbohrung durchgeführt wird.

8. Rotierendes Schaftwerkzeug, insbesondere Reibahle, mit einem Schaft (12), in dem zumindest ein Längskanal (17) für Kühl-/Schmiermittel vorgesehen ist, mit einem mit dem Schaft (12) verbundenen Schneidkopf (13), der zumindest eine Schneide (19) und eine Spannut (15) aufweist, dadurch gekennzeichnet, daß die Größe des Einstellwinkels (κ) in Abhängigkeit des Rückspanwinkels (γ) oder umgekehrt ausgebildet ist und ein Rückspanwinkel (γ) einer Nebenschneide (24) kleiner als 0° ausgebildet ist.

9. Schaftwerkzeug nach Anspruch 8, dadurch gekennzeichnet, daß mit zunehmender Größe des Einstellwinkels (κ) der Rückspanwinkel (γ) kleiner ausgebildet ist.

10. Schaftwerkzeug nach einen der Ansprüche 8 oder 9, dadurch gekennzeichnet, daß ein Einstellwinkel (κ) einer Hauptschneide (22) größer als 45° ausgebildet ist.

11. Schaftwerkzeug nach einem der Ansprüche 8 bis 10, dadurch gekennzeichnet, daß der Einstellwinkel (κ) der Hauptschneide (22) in einem Bereich zwischen 45 und 90° ausgebildet ist.

12. Schaftwerkzeug nach einem der Ansprüche 8 bis 11, dadurch gekennzeichnet, daß der Rückspanwinkel (γ) der Nebenschneide (24) in einem Bereich zwischen 0° bis - 20° ausgebildet ist.

13. Schaftwerkzeug nach einem der Ansprüche 7 bis 11, dadurch gekennzeichnet, daß der Einstellwinkel (κ) und der Rückspanwinkel (γ) im Verhältnis zueinander abgestimmt sind, so daß bei einem Vorschub des Schaftwerkzeuges (11) in einem Bereich von 0,1 mm/Umdrehung pro Schneide bis 0,3 mm/Umdrehung pro Schneide ein Span herstellbar ist, dessen Breite kleiner als die dreifacher Dicke des Spanes ist.

14. Schaftwerkzeug nach einem der Ansprüche 8 bis 13, dadurch gekennzeichnet, daß der Einstellwinkel (κ) und der Rückspanwinkel (γ) im Verhältnis zueinander abgestimmt sind, so daß bei einem Vorschub des Schaftwerkzeuges (11) in einem Bereich von 0,1 mm/Umdrehung und pro Schneide bis 0,3 mm/Umdrehung pro Schneide ein nahezu quadratischer Querschnitt (26, 27) des Spanes herstellbar ist.
